# EUROPÄISCHE PATENTSCHRIFT

(11) **EP 1 243 531 B1**
(45) Veröffentlichungstag und Bekanntmachung des Hinweises auf die Patenterteilung: **30.06.2004**
(21) Anmeldenummer: 02005124.9
(22) Anmeldetag: 07.03.2002
(51) Int. Cl.: B65G 47/90, B65B 21/18, B65B 21/12

(54) **Greifvorrichtung für Flaschen oder dergleichen, insbesondere für PET-Flaschen**
Gripper device for bottles or the like, in particular for "pet"-bottles
Dispositif de préhension pour bouteilles ou similaire, en particulier pour des bouteilles "pet"

(30) Priorität: 23.03.2001 DE 20105167 U
(43) Veröffentlichungstag der Anmeldung: 25.09.2002
(73) Patentinhaber: GripTec Technische Produkte GmbH, 83075 Bad Feilnbach (DE)
(72) Erfinder: Pölcher, Wolfgang, 83131 Nussdorf (DE); Hanusch, Hans, 83088 Kiefersfelden (DE)
(74) Vertreter: Bauer, Friedrich, Dipl.-Ing.

(56) Entgegenhaltungen:
- DE-A- 2 111 501
- FR-E- 67 084
- US-A- 1 943 004
- US-A- 3 648 427

## Beschreibung

Die Erfindung betrifft eine Greifvorrichtung für Flaschen oder dergleichen, insbesondere für PET-Flaschen, gemäß dem Oberbegriff des Anspruchs 1.

Greifvorrichtungen dieser Art werden verwendet, um Flaschen beispielsweise aus Trägern oder Kisten vollautomatisch zu entnehmen oder in diese einzusetzen. Hierzu sind Greifereinsätze bekannt, die aus einer gummielastischen Hülse bestehen, die radial außenseitig mit Druckluft beaufschlagt wird und sich dadurch dem Flaschenhals anlegt. Nachteilig ist hierbei jedoch, dass derartige Greifereinsätze relativ leicht beschädigt werden können, was zu einem Druckabfall in der Druckluft und damit zu einem Ausfall der Anlage führt. Weiterhin ist die Lebensdauer derartiger gummielastischer Greifereinsätze relativ gering.

Ferner sind stauchbare, gummielastische Greifereinsätze bekannt. Bei derartigen Greifereinsätzen stellt Schmutz zusätzlich ein besonderes Problem dar, der sich hinter den Greifereinsätzen ablegen und meist nur noch nach Demontage des Greifereinsatzes beseitigt werden kann. Aufgrund der dauernden starken Biegebeanspruchung ist weiterhin die Lebensdauer derartiger Greifereinsätze sehr gering.

Ein weiteres großes Problem besteht darin, dass PET-Flaschen im Laufe der Zeit, bedingt durch Reinigungsvorgänge, beträchtlich schrumpfen können und dadurch kürzer werden. Eine Verkürzung um bis zu 8 mm ist ohne weiteres möglich. Dies bedingt, dass der im Bereich des Flaschenhalses angeordnete Halsring tiefer als bei neuen PET-Flaschen liegt, so dass die Greiferelemente alte PET-Flaschen nicht mehr ordnungsgemäß unterhalb des Halsrings greifen können. Hierdurch ist kein sicheres und definiertes Halten der PET-Flaschen gewährleistet und es besteht die Gefahr, dass die Flaschen beim Ergreifen und Umsetzen in Schräglage kommen und nicht mehr kippsicher abgesetzt oder zielsicher in den Kasten oder Träger eingesetzt werden können.

Weiterhin sind Greifereinsätze in der Form von Greiffingern bekannt, die gelenkig innerhalb des Gehäuses gelagert sind und nach dem Absenken des Greifers über den Flaschenhals radial nach innen geschwenkt werden können. In der nach innen geschwenkten Stellung untergreifen Greifhaken den Halsring von PET-Flaschen, so dass diese angehoben werden können. Die Schwenkbewegung der Greiffinger erfolgt über einen Stellkolben mit unterschiedlichem Durchmesser, an dem die oberen Enden der Greiffinger anliegen. Nachteilig ist hierbei, dass die Lebensdauer dieser bekannten Greiffinger relativ kurz ist. Darüber hinaus benötigt diese bekannte Greiffingeranordnung einen nicht unerheblichen Einbauraum, so dass es nicht möglich ist, den Durchmesser des Gehäuses derart zu verringern, dass ein enges Stellen schmaler Flaschen möglich ist.

Der Erfindung liegt von daher die Aufgabe zugrunde, eine Greifvorrichtung der eingangs genannten Art zu schaffen, die bei einem einfachen Aufbau ein exaktes Greifen der Flaschen ermöglicht und eine lange Lebensdauer aufweist.

Diese Aufgabe wird erfindungsgemäß durch die Merkmale des Anspruchs 1 gelöst. Vorteilhafte Ausführungsformen der Erfindung sind in den weiteren Ansprüchen beschrieben.

Bei der erfindungsgemäßen Greifvorrichtung sind die Greiferelemente als Greiffinger ausgebildet, die in ihrem unteren Endbereich jeweils mindestens einen vorstehenden Nocken aufweisen. Der Nocken ist mit der zugeordneten Nockenführung des Gehäuses in Kontakteingriff, um die Vertikalbewegung der Greiffinger mit deren Radialbewegung zwangszukoppeln.

Die erfindungsgemäße Greifvorrichtung kann bei einfachem Aufbau die Flaschen sehr exakt greifen, da die Greiferelemente in ihrem unteren Endbereich, an dem sie mit dem Flaschenhals in Eingriff treten, zwangsgeführt sind. Aufgrund dieser Anordnung treten keine nennenswerten Materialermüdungserscheinungen in den Greiffingern auf, so dass deren Lebensdauer wesentlich erhöht werden kann. Aufgrund des exakten, einheitlichen Bewegungsablaufs, den sämtliche um den Umfang der Flasche verteilten Greiffinger durchführen, wird die Flasche, zweckmäßigerweise unterstützt durch eine am oberen Flaschenende aufsetzbare Ausstoßeinrichtung, immer gerade angehoben und abgesetzt. Ein Schaukeln oder Umfallen der Flaschen nach dem Absetzen wird verhindert. Weiterhin wird ein einwandfreies, zielgenaues Einsetzen der Flaschen in den Träger oder Behälter sichergestellt. Die Greifvorrichtung kann darüber hinaus ohne weiteres derart ausgebildet werden, dass sie auf eine sehr leichte und gründliche Weise zu reinigen ist. Weiterhin ist eine Ausbildung in der Art möglich, dass der radiale Platzbedarf minimiert und dadurch der Außendurchmesser des Gehäuses sehr gering gehalten werden kann, wodurch auch dünne Flaschen ergriffen werden können, die eng aneinander gestellt sind.

Eine einfach herzustellende und ausfallsicher funktionierende Ausführung ergibt sich, wenn die Nockenführungen aus im Gehäuse vorgesehenen Führungsschlitzen bestehen, welche schräg nach innen verlaufen.

Vorteilhafterweise erstrecken sich die Nockenführungen von der Außenumfangsfläche des Gehäuses durch das Gehäuse hindurch bis zu dessen Innenumfangsfläche. In diesem Fall weist das Gehäuse zweckmäßigerweise im Bereich der Nockenführungen Wandausnehmungen auf, die einen Freiraum zum Einführen der Greiferelemente in deren radial äußeren Stellung bilden. Die Greiferelemente können hierdurch in die Wandausnehmungen des Gehäuses eintauchen, wodurch sie in radialer Richtung sehr wenig Platz benötigen.

Vorteilhafterweise ist der obere Randbereich der Wandausnehmungen mit einem nahen vertikalen Abstand zum oberen Ende der Nockenführungen angeordnet, so dass die Greiferelemente in ihrer vollkommen geöffneten Stellung unter radialer Vorspannung am Randbereich anliegen. Diese radial nach innen gerichtete Vorspannung unterstützt die Bewegung der Greiferelemente in Schließrichtung, wenn die Greiferelemente aus ihrer äußersten Öffnungsstellung in die Schließstellung überführt werden sollen. Auf diese Weise ist sehr wenig Kraft erforderlich, um die Greiferelemente längs der Führungsschlitze nach innen zu bewegen.

Um ein unerwünschtes Verdrehen der Greiferelemente zu vermeiden, ist es vorteilhaft, wenn jedes Greiferelement zwei auf gegenüberliegenden Seiten angeordnete Nocken aufweist.

Vorteilhafterweise sind die Greiferelemente als Greiffinger ausgebildet, die an ihrem unteren Ende jeweils einen Greifbacken mit einem Greifhaken aufweisen, wobei die Nocken in unmittelbarer Nachbarschaft der Greifbacken angeordnet sind.

Weiterhin ist es vorteilhaft, wenn radial innerhalb der Greiferelemente eine Abstützeinrichtung vorgesehen sind, an der die Greiferelemente zumindest in ihrer vollkommen geschlossenen Stellung unter radialer Vorspannung anliegen. Die hierdurch erzeugte, radial nach außen gerichtete Vorspannung bewirkt ein leichtes Überführen der Greiferelemente von ihrer geschlossenen Stellung in die Öffnungsstellung, da die Vorspannung die Bewegung der Greiferelemente längs der Führungsschlitze nach außen unterstützt.

Die Erfindung wird nachfolgend anhand der Zeichnungen beispielshaft näher erläutert. Es zeigen
- Figur 1 :: eine Schnittdarstellung durch einen erfindungsgemäßen Greifer während des Absenkvorgangs unmittelbar nach dem Aufsetzen auf eine PET-Flasche,
- Figur 2 :: einen Schnitt längs der Linie II-II von Figur 1,
- Figur 3 :: eine Schnittdarstellung entsprechend Figur 1 beim Hochheben der Flasche,
- Figur 4 :: eine Schnittdarstellung längs der Linie IV-IV von Figur 3,
- Figuren 5 und 6 :: zwei Seitendarstellungen des Greifers von Figur 1,
- Figur 7 :: eine Schnittdarstellung längs der Linie VII-VII von Figur 6,
- Figuren 8 und 9 :: zwei Seitenansichten des Greifers entsprechend den Figuren 5 und 6, jedoch ohne Greiferelemente,
- Figur 10 :: eine Schnittdarstellung längs der Linie X-X von Figur 9,
- Figuren 11, 13, 15 :: drei verschiedene Ausführungsformen der Greiferelemente mit Kolben,
- Figuren 12, 14, 16 :: Draufsichten auf die Greiferelemente gemäß den Figuren 11, 13 und 15, wobei in den Figuren 12 und 14 der Kolben weggelassen ist, und
- Figuren 17 und 18 :: die verschiedenen Zustände des Greifers beim Greifen, Umsetzen und Ablegen einer Flasche, wobei Figur 18 die Fortsetzung von Figur 17 ist.

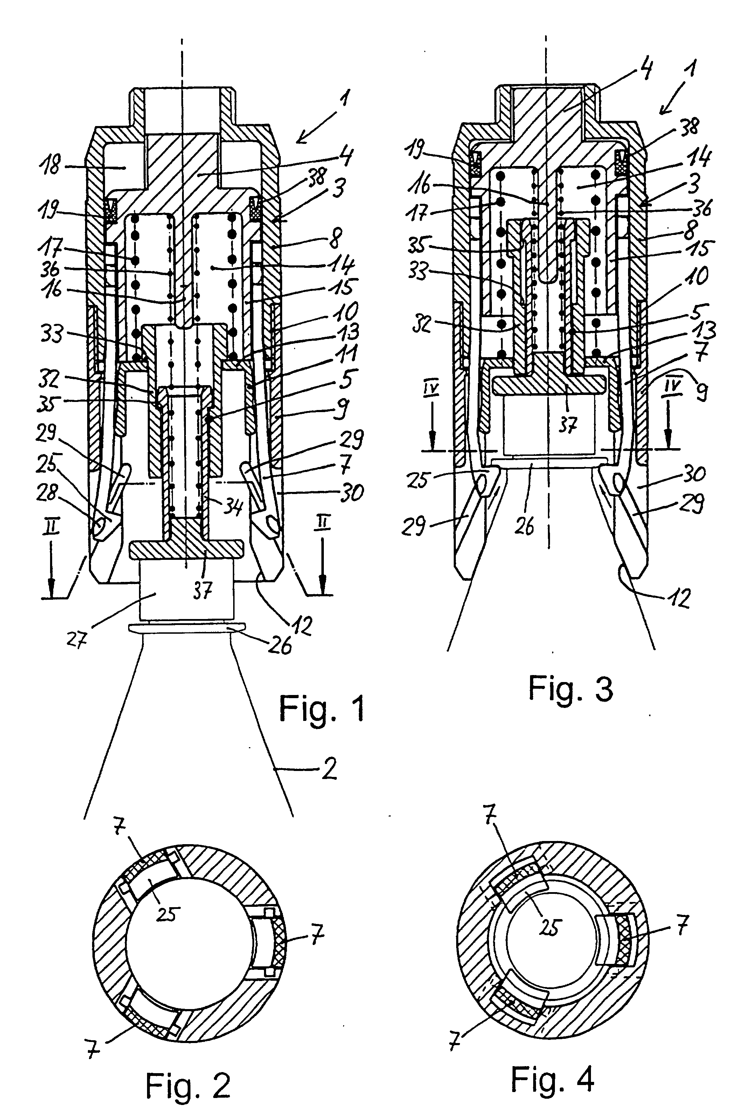

Aus den Figuren 1 bis 4 ist ein Greifer 1 zum Greifen von PET-Flaschen 2 ersichtlich. In der Praxis sind in der Regel mehrere derartige Greifer 1 in einer regelmäßigen Matrixanordnung nebeneinander an einem nicht dargestellten Greiferkopf befestigt, der wiederum Teil einer gesamten, nicht dargestellten Greifvorrichtung ist.

Der Greifer 1 besteht im wesentlichen aus einem hohlzylinderförmigen Gehäuse 3, einem im Gehäuse 3 vertikal bewegbaren Kolben 4, einer zentral innerhalb des Gehäuses 3 angeordneten, vertikal bewegbaren Ausstoßeinrichtung 5 sowie einem Greifereinsatz 6 mit drei über den Umfang regelmäßig verteilten, elastischen Greiferelementen 7 in der Form von hakenförmigen Greiffingern, die mittels des Kolbens 4 in vertikaler Richtung bewegbar sind.

Das Gehäuse 3 ist an seinem oberen Ende fest mit dem nicht dargestellten Greiferkopf verbunden. Weiterhin ist das Gehäuse 3 zweiteilig aufgebaut und besteht aus einem oberen Gehäuseteil 8 und einem unteren Gehäuseteil 9. Beide Gehäuseteile 8, 9 werden mittels einer Schraubverbindung 10 fluchtend miteinander verbunden. Aufgrund dieser Zweiteilung dieses Gehäuses 3 ist es möglich, im Verbindungsbereich zwischen den Gehäuseteilen 8, 9 radial nach außen vorstehende Halteelemente einer becherförmigen, nach unten offenen Abstützeinrichtung 11 einzuklemmen und diese dadurch relativ zum Gehäuse 3 festzulegen. An ihrem unteren Ende weist das Gehäuse 3 in bekannter Weise eine Einführöffnung 12 für die PET-Flasche 2 auf. Die obere, horizontale Wand 13 der Abstützeinrichtung 11 befindet sich in einer Höhe, die knapp unterhalb der Mitte des Gehäuses 3 liegt.

Der Kolben 4 ist am oberen Ende des Gehäuses 3 angeordnet und weist einen inneren, unten offenen Hohlraum 14 auf. Der Hohlraum 14 wird von einer Umfangswand 15 umschlossen. Von oben her erstreckt sich mittig im Kolben 4 ein vertikaler Führungsstift 16 nach unten. Weiterhin ist der Kolben 4 mittels einer Druckfeder 17 nach oben vorgespannt, die sich an ihrem unteren Ende an der Ausstoßeinrichtung 5 und an ihrem oberen Ende an der oberen horizontalen Begrenzungswand des Hohlraums 14 abstützt.

Durch Einführen von Druckluft in einen Zwischenraum 18 zwischen Kolben 4 und Gehäuse 3 durch eine nicht dargestellte, im Gehäuse 3 vorgesehene Druckluftzuführöffnung hindurch kann der Kolben 4 entgegen der Vorspannkraft der Druckfeder 17 nach unten gedrückt werden, wie in Figur 1 gezeigt. Wird der Zwischenraum 18 entlüftet, wie in Figur 3 gezeigt, bewegt sich der Kolben 4 dagegen durch die Vorspannkraft der Druckfeder 17 wieder nach oben.

Um den Zwischenraum 18 gegen die Gehäuseseitenwand hin abzudichten, ist im oberen, seitlichen Schulterbereich des Kolbens 4 eine Umfangsnut vorgesehen, in der ein Dichtring 19 eingelegt ist. Diese Dichtung 19 ist so ausgeführt, dass dessen äußere Dichtlippe 38 verstärkt gegen die Innenwand des Gehäuses 3 gedrückt wird, wenn im Zwischenraum 18 Druck aufgebaut wird.

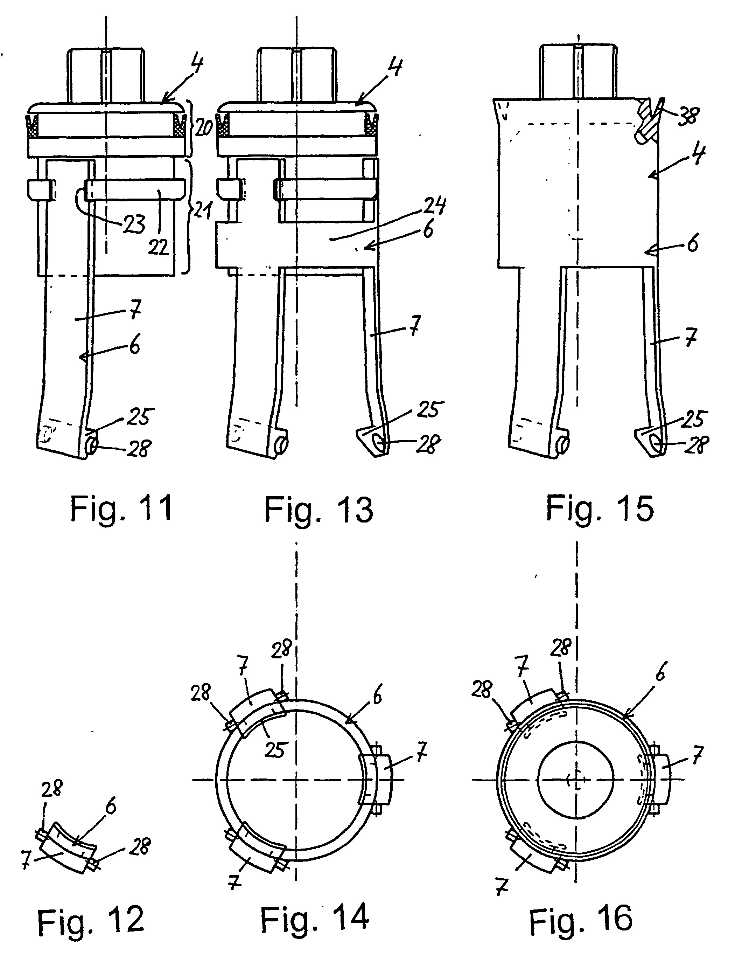

Der Kolben 4 dient - wie bereits ausgeführt - zum vertikalen Bewegen der hakenförmigen Greiferelemente 7. Die Verbindung zwischen den in den Figuren 1 und 3 gezeigten Greiferelementen 7 und dem Kolben 4 ist aus Figur 11 ersichtlich. In Figur 11 ist lediglich ein Greiferelement 7 dargestellt, obwohl in Wirklichkeit drei regelmäßig über den Umfang des Kolbens 4 regelmäßig verteilte Greiferelemente 7 vorhanden sind. Wie aus Figur 11 ersichtlich, ist die Umfangsnut, in welcher der Dichtring 19 eingesetzt ist, in einem oberen Bereich 20 des Kolbens 4 angeordnet, der einen größeren Durchmesser aufweist, als der daran anschließende untere Bereich 21. Im unteren Bereich 21 ist mit vertikalem Abstand zum oberen Bereich 20 ein radial vorspringender Umfangsring 22 am Kolben 4 ausgebildet. In diesem Umfangsring 22 sind drei regelmäßig über den Umfang verteilte Ausnehmungen 23 vorgesehen, in welche die Greiferelemente 7 eingesetzt sind. Die Ausnehmungen 23 haben eine etwas geringere Breite als die Greiferelemente 7 im Bereich oberhalb und unterhalb des Umfangsrings 22, so dass die Greiferelemente 7 den Umfangsring 22 oben und unten geringfügig übergreifen und dadurch in vertikaler Richtung festgelegt sind.

Die in Figur 13 gezeigte alternative Ausführungsform des Greifereinsatzes 6 unterscheidet sich von Figur 11 nur dadurch, dass die einzelnen Greiferelemente 7 mittels eines umlaufendes Bandes 24 nahe unterhalb des Umfangsrings 22 miteinander verbunden sind und dadurch eine zusammenhängende Nockenmanschette bilden. Diese Nockenmanschette ist in der gleichen Weise wie die Ausführungsform von Figur 11 am Kolben 4 befestigt.

Der Durchmesser des Kolbens 4 ist im unteren Bereich 21 derart bemessen, dass in diesem Bereich zwischen Kolben 4 und Gehäuseinnenwand ein Zwischenraum vorhanden ist, der nur geringfügig breiter ist als die Dicke der Greiferelemente 7. Weiterhin entspricht der Außendurchmesser des unteren Bereichs 21 dem Außendurchmesser der Abstützeinrichtung 11. Die zungenförmigen, greiffingerartigen Greiferelemente 7 sind daher zwischen Kolben 4 und Abstützeinrichtung 11 einerseits und der Gehäuseinnenwand andererseits exakt, jedoch leichtgängig geführt.

Wie insbesondere aus den Figuren 11 bis 16 ersichtlich, haben die Greiferelemente 7 im wesentlichen die Form von geradlinigen Laschen, die in der Nähe des unteren Endbereichs geringfügig nach außen gebogen sind und im unteren Endbereich nach innen vorspringende Greifbacken 25 aufweisen. Die Greifbacken 25 springen derart radial nach innen vor, dass sie einen Halsring 26, der an der PET-Flasche 2 unterhalb des Schraubverschlusses 27 angeordnet ist, untergreifen können. Weiterhin sind die Greiferelemente 7 elastisch ausgebildet.

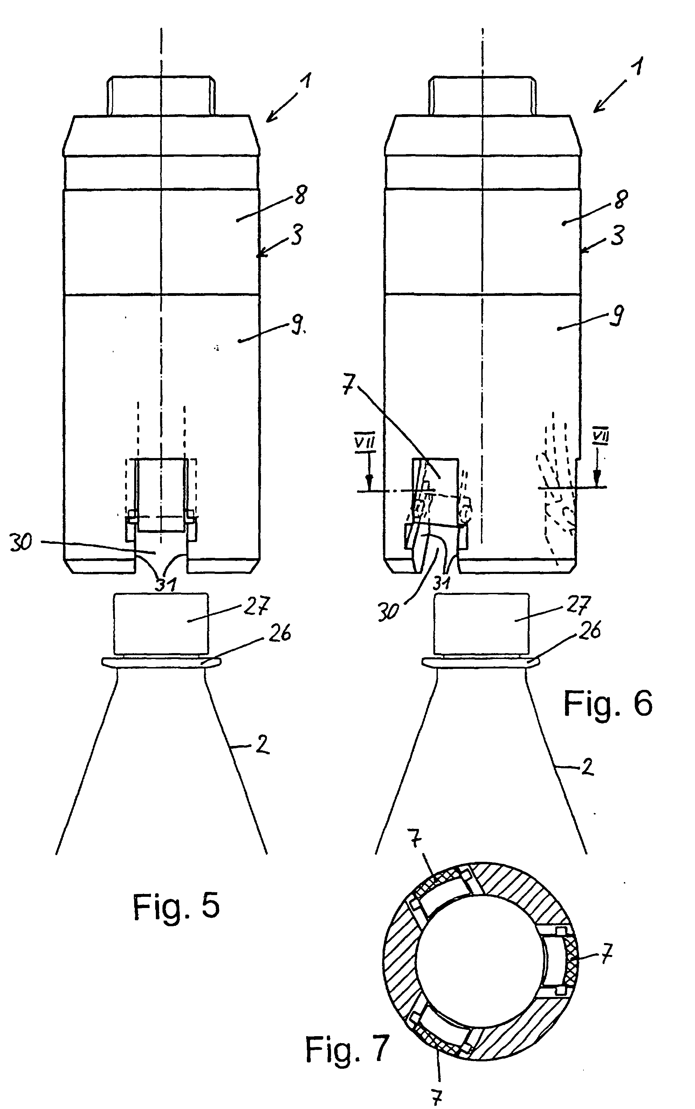

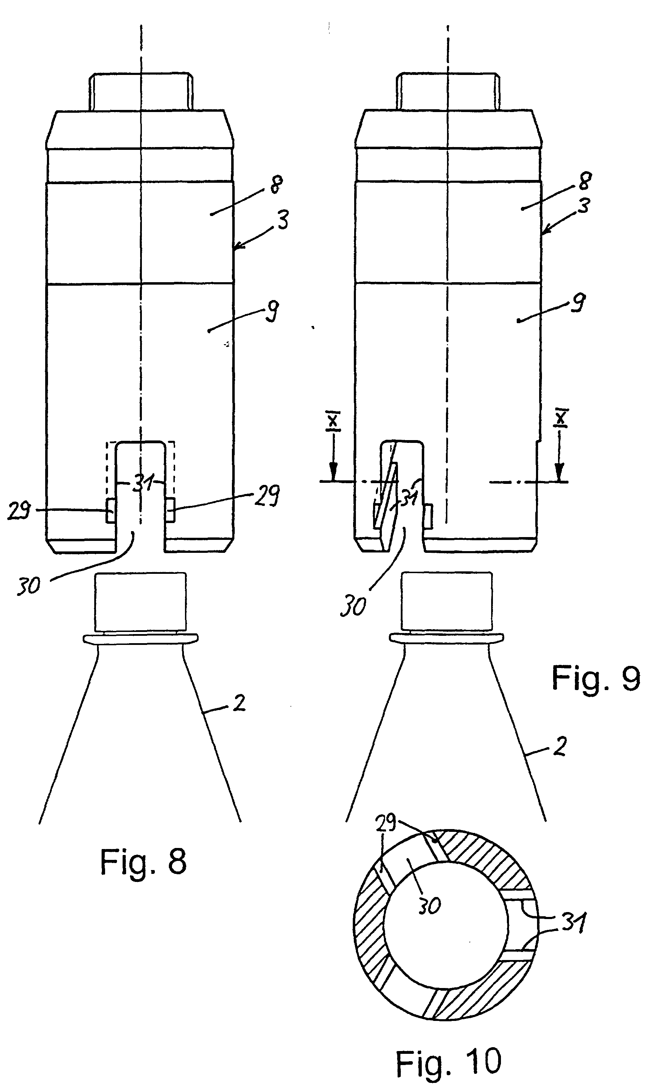

Zum Bewegen der Greifbacken 25 in radialer Richtung ist an den Seitenflächen der Greifbacken 25 jeweils ein seitlich vorstehender Nocken 28 angeformt. Die Nocken können einen kreisförmigen, ovalen oder länglich-abgeschrägten Querschnitt aufweisen. Die Nocken 28 greifen in Nockenführungen 29 des Gehäuses 3 ein, wobei die Nockenführungen 29 im gezeigten Ausführungsbeispiel die Form von Führungsschlitzen haben. Wie insbesondere aus den Figuren 5 bis 10 ersichtlich, sind die Nockenführungen 29 beidseits in Seitenwänden 31 von Wandausnehmungen 30 angeordnet, die sich vom unteren Rand des Gehäuses 3 vertikal nach oben erstrecken und nur eine geringfügig größere Breite als die Greiferelemente 7 haben. Die Wandausnehmungen 30 durchdringen die Gehäusewand vollständig. Die nutförmigen Nockenführungen 29 erstrecken sich über die gesamte Gehäusewanddicke von außen nach innen, wobei sie schräg nach oben verlaufen. Die Nockenführungen 29 bilden somit eine Kulisse für die Nocken 28, die in die Nockenführungen 29 eingreifen. Sind die Greiferelemente 7 mittels des Kolbens 4 abgesenkt, wie in Figur 1 dargestellt, wird der untere Bereich der Greiferelemente 7 mittels der Nocken 28 und Nockenführungen 29 radial nach außen gedrückt. In dieser Stellung liegt der untere Bereich der Greiferelemente 7 innerhalb der Wandausnehmungen 30, d.h. zwischen den Seitenwänden 31. Der Platzbedarf ist daher sehr gering. Werden die Greiferelemente 7 nach oben gezogen, wird der untere Bereich der Greiferelemente 7 mittels der Nockenführungen 29 zwangsweise radial nach innen bewegt, wodurch der Halsring 36 untergriffen werden kann.

Die Ausstoßeinrichtung 5 unterstützt das exakte, schaukelfreie Halten der PET-Flaschen 2 während des Greif- und Umsetzvorgangs sowie das exakte, ruhige, wackelfreie Absetzen der PET-Flaschen 2 nach dem Umsetzvorgang. Die Ausstoßeinrichtung 5 weist eine Schiebehülse 32 auf, die vertikal verschiebbar und mittig in der Abstützeinrichtung 11 geführt ist. Die Vertikalbewegung der Schiebehülse 32 nach unten wird durch eine radial nach außen vorstehende Radialschulter 33 begrenzt, welche die Abstützeinrichtung 11 übergreift, wie aus Figur 1 ersichtlich. Innerhalb der Schiebehülse 32 ist ein Stößel 34 vertikal verschiebbar gelagert, der nach unten über die Schiebehülse 32 vorsteht. Die Vertikalbewegung des Stößels 34 nach unten ist durch eine radial nach außen vorspringende Radialschulter 35 begrenzt, die eine radiale Innenschulter der Schiebehülse 32 übergreift.

Der Stößel 34 ist mittels einer Feder 36 nach unten vorgespannt, deren oberes Ende am Kolben 4 abgestützt ist. Aufgrund dieser Anordnung lässt sich der Stößel 36 von einer nach unten ausgefahrenen Stellung, die in Figur 1 gezeigt ist, zusammen mit der Schiebehülse 32 nach oben in die in Figur 3 gezeigte Stellung verschieben, wenn der Greifer 1 auf die PET-Flasche 2 abgesenkt wird. Am unteren Ende des Stößels 34 befindet sich eine Druckplatte 37, die auf die obere Stirnfläche der PET-Flasche 2 aufgesetzt werden kann. Diese Druckplatte 37 befindet sich in der in Figur 1 gezeigten, ausgefahrenen Stellung des Stößels 36 in einer Höhe, die unterhalb der Greifbacken 25 und in der Nähe des unteren Randes des Gehäuses 3 liegt. In der in Figur 3 gezeigten, zurückgedrückten Stellung befindet sich die Druckplatte 37 in unmittelbarer Nähe der Wand 13 der Abstützeinrichtung 11.

Wie aus den Figuren 15 und 16 ersichtlich, ist es auch möglich, anstelle eines vom Greifereinsatz 6 getrennten Kolbens 4 eine integrale Lösung vorzusehen, bei der Greiferelemente 7 und Kolben 4 einstückig ausgebildet sind. In diesem Fall ist die Dichtlippe 38, welche den Kolben 4 gegenüber der Gehäuseinnenwand abdichtet, direkt an die einstückige Einheit angeformt.

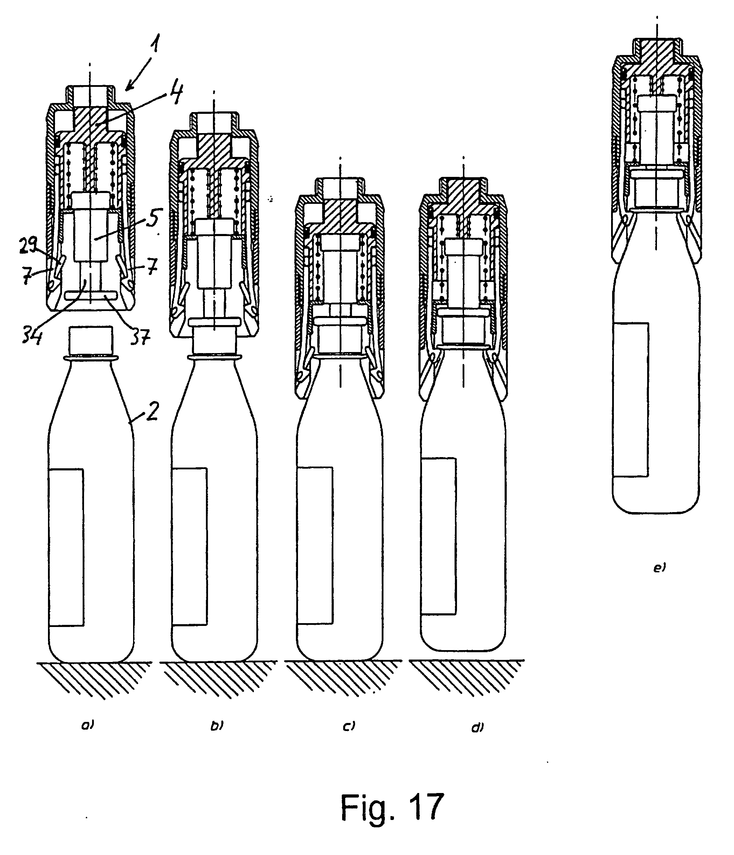

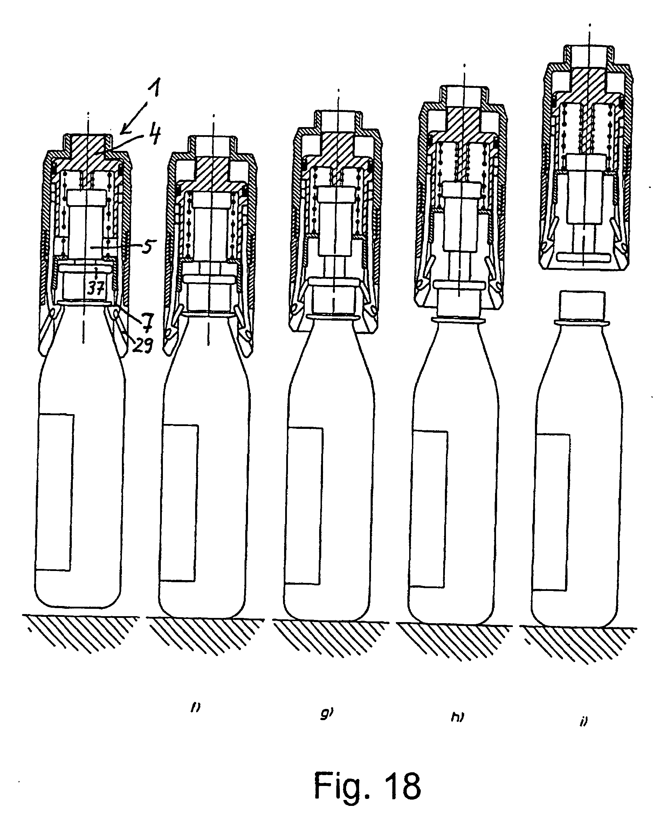

Nachfolgend wird anhand der Figuren 17 und 18 ein Greif-, Umsetz- und Absetzvorgang beschrieben.
- Schritt a:: Der Greifer 1 nähert sich der PET-Flasche 2. Die Ausstoßeinrichtung 5 ist nach unten maximal ausgefahren und der Kolben 4 befindet sich in seiner unteren Stellung, da der Zwischenraum 18 mit Druckluft beaufschlagt ist. Die Greifbacken 25 befinden sich in einer unteren, radial äußeren Stellung.
- Schritt b:: Der Greifer 1 ist so weit abgesenkt, dass die Ausstoßeinrichtung 5 auf dem oberen Rand der PET-Flasche 2 aufsetzt.
- Schritt c:: Während der weiteren Abwärtsbewegung des Greifers 1 taucht der Stößel 36 teleskopartig in die Schiebehülse 32 ein und verschiebt auch die Schiebehülse 32 nach oben bis in die maximal obere Stellung.
- Schritt d:: Der Zwischenraum 18 wird entlüftet, wodurch die Druckfeder 17 den Kolben 4 nach oben drückt. Die Greiferelemente 7 werden nach oben gezogen und die Greifbacken 25 mittels der Nockenführungen 29 nach innen bewegt, bis die Greifbacken 25 den Halsring 26 untergreifen.
- Schritt e:: Die PET-Flasche 2 wird umgesetzt und so weit abgesenkt, bis sie sich geringfügig über dem Boden befindet.
- Schritt f:: Die PET-Flasche 2 wird abgesetzt. Dies erfolgt dadurch, dass der Zwischenraum 18 mit Druckluft versorgt und hierdurch der Kolben 4 nach unten gedrückt wird. Die Greiferelemente 7 werden radial nach außen gefahren. Die Ausstoßeinrichtung 5 drückt die PET-Flasche 2 auf die Unterlage.
- Schritt g:: Der Greifer 1 wird nochgefahren, wobei die Ausstosseinrichtung 5 weiter ausfährt.
- Schritt h:: Die Ausstoßeinrichtung 5 ist maximal ausgefahren.
- Schritt i:: Die Ausstoßeinrichtung 5 hebt von der PET-Flasche 2 ab.

Wie ersichtlich, bietet die beschriebene Anordnung, bestehend aus zwangsgeführten Greiferelementen 7 und Ausstoßeinrichtung 5, unter anderem den Vorteil, dass auch solche Flaschen einwandfrei ergriffen, umgesetzt und abgesetzt werden können, deren Länge von der Normlänge in größerem Maße abweicht. Dies bedeutet mit anderen Worten, dass auch größere Normabweichungen hinsichtlich der Höhe des Halsrings 26 unkritisch sind und die Funktionsweise der Vorrichtung nicht negativ beeinflussen.

## Patentansprüche

1. Greifvorrichtung für Flaschen oder dergleichen, insbesondere für PET-Flaschen (2), mit mindestens einem Greiferkopf und mehreren am Greiferkopf gehalterten Greifern (1), die jeweils ein Gehäuse (3) mit einem unten offenen Aufnahmeraum für die zu greifenden Flaschen sowie einen im Gehäuse (3) angeordneten Greifereinsatz (6) mit mehreren, mit der Flasche in Halteeingriff bringbaren Greiferelementen (7) aufweisen, die mit am Gehäuse (3) vorgesehenen Nockenführungen (29) derart in Wirkverbindung sind, dass eine Vertikalbewegung der Greiferelemente (7) mit einer Bewegung der Greiferelemente (7) in radialer Richtung zwangsgekoppelt ist, **dadurch gekennzeichnet, dass** die Greiferelemente (7) als Greiffinger ausgebildet sind, die in ihrem unteren Endbereich jeweils mindestens einen vorstehenden Nocken (28) aufweisen, der mit der zugeordneten Nockenführung (29) des Gehäuses (3) in Kontakteingriff ist, um die Vertikalbewegung der Greiffinger mit deren Radialbewegung zwangszukoppeln.

2. Greifvorrichtung nach Anspruch 1, **dadurch gekennzeichnet, dass** die Nockenführungen (29) aus im Gehäuse (3) vorgesehenen Führungsschlitzen bestehen, welche schräg nach innen verlaufen.

3. Greifvorrichtung nach Anspruch 2, **dadurch gekennzeichnet, dass** sich die Nockenführungen (29) von der Außenumfangsfläche des Gehäuses (3) durch das Gehäuse (3) hindurch bis zu dessen Innenumfangsfläche erstrecken.

4. Greifvorrichtung nach einem der vorhergehenden Ansprüche, **dadurch gekennzeichnet, dass** das Gehäuse (3) im Bereich der Nockenführungen (29) Wandausnehmungen (30) aufweist, die einen Freiraum zum Einführen der Greiferelemente (7) in deren radial äußeren Stellung bilden.

5. Greifvorrichtung nach Anspruch 4, **dadurch gekennzeichnet, dass** sich die Wandausnehmungen (30) vom unteren freien Rand des Gehäuses (3) vertikal nach oben erstrecken.

6. Greifvorrichtung nach Anspruch 4 oder 5, **dadurch gekennzeichnet, dass** der obere Wandbereich der Wandausnehmungen (30) mit einem nahen vertikalen Abstand zum oberen Ende der Nockenführungen (29) angeordnet ist, so dass die Greiferelemente (7) in ihrer vollkommen geöffneten Stellung unter radialer Vorspannung am Randbereich anliegen.

7. Greifvorrichtung nach einem der vorhergehenden Ansprüche, **dadurch gekennzeichnet, dass** die Nocken (28) seitlich, d.h. quer zur radialen Bewegungsrichtung, über die Seitenflächen der Greiferelemente (7) vorstehen.

8. Greifvorrichtung nach einem der vorhergehenden Ansprüche, **dadurch gekennzeichnet, dass** jedes Greiferelement (7) zwei auf gegenüberliegenden Seiten angeordnete Nocken (28) aufweist.

9. Greifvorrichtung nach einem der vorhergehenden Ansprüche, **dadurch gekennzeichnet, dass** die Nocken (28) einen kreisförmigen, ovalen oder länglich-abgeschrägten Querschnitt aufweisen.

10. Greifvorrichtung nach einem der vorhergehenden Ansprüche, **dadurch gekennzeichnet, dass** die Greiffinger an ihrem unteren Ende jeweils einen Greifbacken (25) aufweisen, wobei die Nocken (28) in unmittelbarer Nachbarschaft der Greifbacken (25) angeordnet sind.

11. Greifvorrichtung nach Anspruch 10, **dadurch gekennzeichnet, dass** die Greifbacken (25) als Greifhaken ausgebildet sind.

12. Greifvorrichtung nach einem der vorhergehenden Ansprüche, **dadurch gekennzeichnet, dass** radial innerhalb der Greiferelemente (7) und oberhalb der Nockenführungen (29) eine Abstützeinrichtung (11) vorgesehen ist, an der die Greiferelemente (7) zumindest in ihrer vollkommen geschlossenen Stellung unter radialer Vorspannung anliegen.

13. Greifvorrichtung nach Anspruch 12, **dadurch gekennzeichnet, dass** die Abstützeinrichtung (11) aus einem mit dem Gehäuse (3) fest verbundenen, becherförmigen, unten offenen Element besteht.

14. Greifvorrichtung nach einem der vorhergehenden Ansprüche, **dadurch gekennzeichnet, dass** die Greiferelemente (7) aus einzelnen, länglichen Greiffingern bestehen, die mit einem vertikal innerhalb des Gehäuses (3) bewegbaren Kolben (4) verbunden sind.

15. Greifvorrichtung nach Anspruch 14, **dadurch gekennzeichnet, dass** die Greiffinger formschlüssig an einem radialen Umfangsring (22) des Kolbens (4) eingehängt sind.

16. Greifvorrichtung nach Anspruch 14 oder 15, **dadurch gekennzeichnet, dass** die Greiffinger mittels eines umlaufenden Bandes (24) miteinander verbunden sind und zusammen mit dem Band (24) eine Nockenmanschette bilden.

17. Greifvorrichtung nach einem der Ansprüche 14 bis 16, **dadurch gekennzeichnet, dass** die Greiffinger an den Kolben (4) angeformt sind und der Kolben (4) eine angeformte, umlaufende Dichtlippe (38) aufweist, um den Kolben (4) gegen die Gehäuseinnenwand abzudichten.

## Claims

1. Gripping apparatus for bottles or the like, in particular for PET bottles (2), having at least one gripper head and a plurality of grippers (1) which are secured on the gripper head and each have a housing (3), with an accommodating space which is open in the downward direction for the bottles which are to be gripped, and a gripper insert (6), which is arranged in the housing (3) and has a plurality of gripper elements (7) which can be brought into retaining engagement with the bottle and are in operative connection with protuberance guides (29) provided on the housing (3), such that a vertical movement of the gripper elements (7) is positively coupled to a movement of the gripper elements (7) in the radial direction, **characterized in that** the gripper elements (7) are designed as gripping fingers which, in their bottom end region, each have at least one projecting protuberance (28) which is in contact engagement with the associated protuberance guide (29) of the housing (3) in order for the vertical movement of the gripping fingers to be positively coupled to the radial movement thereof.

2. Gripping apparatus according to Claim 1, **characterized in that** the protuberance guides (29) comprise guide slots which are provided in the housing (3) and run obliquely inwards.

3. Gripping apparatus according to Claim 2, **characterized in that** the protuberance guides (29) extend through the housing (3) from its outer circumferential surface to its inner circumferential surface.

4. Gripping apparatus according to one of the preceding claims, **characterized in that** the housing (3), in the region of the protuberance guides (29), has wall cutouts (30) which form a free space for the introduction of the gripper elements (7) in the radially outer position thereof.

5. Gripping apparatus according to Claim 4, **characterized in that** the wall cutouts (30) extend vertically upwards from the free bottom border of the housing (3).

6. Gripping apparatus according to Claim 4 or 5, **characterized in that** the top wall region of the wall cutouts (30) is spaced apart by a close vertical distance from the top end of the protuberance guides (29), with the result that the gripper elements (7), in their fully opened position, butt with radial prestressing against the border region.

7. Gripping apparatus according to one of the preceding claims, **characterized in that** the protuberances (28) project laterally, i.e. transversely to the radial movement direction, beyond the side surfaces of the gripper elements (7).

8. Gripping apparatus according to one of the preceding claims, **characterized in that** each gripper element (7) has two protuberances (28) arranged on opposite sides.

9. Gripping apparatus according to one of the preceding claims, **characterized in that** the protuberances (28) have a circular, oval or elongate-bevelled cross section.

10. Gripping apparatus according to one of the preceding claims, **characterized in that** the gripping fingers each have a gripping jaw (25) at their bottom end, the protuberances (28) being arranged in the immediate vicinity of the gripping jaws (25).

11. Gripping apparatus according to Claim 10, **characterized in that** the gripping jaws (25) are designed as gripping hooks.

12. Gripping apparatus according to one of the preceding claims, **characterized in that** a supporting device (11) is provided radially within the gripper elements (7) and above the protuberance guides (29), the gripper elements (7), at least in their fully closed position, butting with radial prestressing against said supporting device.

13. Gripping apparatus according to Claim 12, **characterized in that** the supporting device (11) comprises a cup-like element which is open at the bottom and is fixed to the housing (3).

14. Gripping apparatus according to one of the preceding claims, **characterized in that** the gripper elements (7) comprise individual, elongate gripping fingers which are connected to a piston (4) which can be moved vertically within the housing (3).

15. Gripping apparatus according to Claim 14, **characterized in that** the gripping fingers are fitted in a form-fitting manner on a radial circumferential ring (22) of the piston (4).

16. Gripping apparatus according to Claim 14 or 15, **characterized in that** the gripping fingers are connected to one another by means of an encircling band (24) and, together with the band (24), form a protuberance sleeve.

17. Gripping apparatus according to one of Claims 14 to 16, **characterized in that** the gripping fingers are integrally formed on the piston (4) and the piston (4) has an integrally formed, encircling sealing lip (38) in order to seal the piston (4) in relation to the inner housing wall.

## Revendications

1. Dispositif de préhension pour bouteilles ou similaires, en particulier pour des bouteilles (2) en polyéthylène téréphtalate (PET), comportant au moins une tête de préhension et plusieurs préhenseurs (1) qui sont retenus sur la tête de préhension et qui comprennent chacun un boîtier (3) avec une chambre de réception ouverte en bas pour les bouteilles à prendre ainsi qu'un insert de préhension (6) agencé dans le boîtier (3) et présentant plusieurs éléments de préhension (7) qui sont susceptibles d'être amenés en engagement de retenue avec la bouteille et qui sont en liaison d'action avec des guidages à came (29) prévus sur le boîtier (3), de telle sorte qu'un mouvement vertical des éléments de préhension (7) est couplé à force avec un mouvement des éléments de préhension (7) en direction radiale, **caractérisé en ce que** les éléments de préhension (7) sont réalisés sous forme de doigts de préhension qui comprennent dans leur zone d'extrémité inférieure chacun au moins une came saillante (28) qui est en engagement de contact avec le guidage à came associé (29) du boîtier (3), afin de coupler à force le mouvement vertical des doigts de préhension avec leur mouvement radial.

2. Dispositif de préhension selon la revendication 1, **caractérisé en ce que** les guidages à came (29) sont constitués par des fentes de guidage prévues dans le boîtier (3), qui s'étendent en oblique vers l'intérieur.

3. Dispositif de préhension selon la revendication 2, **caractérisé en ce que** les guidages à came (29) s'étendent depuis la surface périphérique extérieure du boîtier (3) à travers le boîtier (3) jusqu'à sa surface périphérique intérieure.

4. Dispositif de préhension selon l'une des revendications précédentes, **caractérisé en ce que** dans la zone des guidages à came (29), le boîtier (3) présente des évidements de paroi (30) qui forment un espace libre pour introduire les éléments de préhension (7), dans leur position radialement extérieure.

5. Dispositif de préhension selon la revendication 4, **caractérisé en ce que** les évidements de paroi (30) s'étendent depuis le bord inférieur libre du boîtier (3) verticalement vers le haut.

6. Dispositif de préhension selon l'une ou l'autre des revendications 4 et 5, **caractérisé en ce que** la zone supérieure des évidements de paroi (30) est agencée à une distance verticale proche de l'extrémité supérieure des guidages à came (29), de sorte que les éléments de préhension (7) prennent appui sous contrainte radiale contre la zone de bord dans leur position complètement ouverte.

7. Dispositif de préhension selon l'une des revendications précédentes, **caractérisé en ce que** les cames (28) font saillie latéralement, c'est-à-dire transversalement à la direction de mouvement radial, au-delà des surfaces latérales des éléments de préhension (7).

8. Dispositif de préhension selon l'une des revendications précédentes, **caractérisé en ce que** chaque élément de préhension (7) comprend deux cames (28) agencées sur des côtés opposés.

9. Dispositif de préhension selon l'une des revendications précédentes, **caractérisé en ce que** les cames (28) présentent une section transversale circulaire, ovale ou chanfreinée allongée.

10. Dispositif de préhension selon l'une des revendications précédentes, **caractérisé en ce que** les doigts de préhension comprennent chacun à son extrémité inférieure une mâchoire de préhension (25), les cames (28) étant agencées au voisinage immédiat des mâchoires de préhension (25).

11. Dispositif de préhension selon la revendication 10, **caractérisé en ce que** les mâchoires de préhension (25) sont réalisées sous forme de crochets de préhension.

12. Dispositif de préhension selon l'une des revendications précédentes, **caractérisé en ce qu'**il est prévu radialement à l'intérieur des éléments de préhension (7) et au-dessus des guidages à came (29) un organe d'appui (11) contre lequel les éléments de préhension (7) prennent appui sous précontrainte radiale au moins dans leur position complètement fermée.

13. Dispositif de préhension selon la revendication 12, **caractérisé en ce que** l'organe d'appui (11) est constitué par un élément en forme de godet, ouvert en bas et relié solidairement au boîtier (3).

14. Dispositif de préhension selon l'une des revendications précédentes, **caractérisé en ce que** les éléments de préhension (7) sont constitués par des doigts de préhension allongés individuels qui sont reliés à un piston (4) mobile verticalement à l'intérieur du boîtier (3).

15. Dispositif de préhension selon la revendication 14, **caractérisé en ce que** les doigts de préhension sont accrochés en coopération de formes sur une bague périphérique radiale (22) du piston (4).

16. Dispositif de préhension selon l'une ou l'autre des revendications 14 et 15, **caractérisé en ce que** les doigts de préhension sont reliés les uns aux autres au moyen d'une bande périphérique (24) et forment conjointement avec la bande (24) une manchette à cames.

17. Dispositif de préhension selon l'une des revendications 14 à 16, **caractérisé en ce que** les doigts de préhension sont conformés sur le piston (4) et **en ce que** le piston (4) comprend une lèvre d'étanchéité périphérique (38) conformée, pour étancher le piston (4) contre la paroi intérieure du boîtier.
